# EUROPÄISCHE PATENTSCHRIFT

(11) **EP 3 253 563 B1**
(45) Veröffentlichungstag und Bekanntmachung des Hinweises auf die Patenterteilung: **11.09.2019**
(21) Anmeldenummer: 16701053.7
(22) Anmeldetag: 20.01.2016
(51) Int. Cl.: B29D 22/00, B29C 49/00, B29C 49/12, B65D 1/02, C08G 63/181, C08G 63/672, C08G 63/91, C08L 67/02, B29L 31/00, B29K 67/00

(54) **PREFORM ZUR HERSTELLUNG EINES KUNSTSTOFFBEHÄLTERS, HERSTELLUNG DES PREFORMS UND AUS DEM PREFORM HERGESTELLTER KUNSTSTOFFBEHÄLTER SOWIE DESSEN HERSTELLUNG**
PREFORM FOR PRODUCING A PLASTIC CONTAINER, PRODUCTION OF THE PREFORM, PLASTIC CONTAINER PRODUCED FROM THE PREFORM, AND PRODUCTION OF THE PLASTIC CONTAINER
PRÉFORMÉ POUR LA FABRICATION D'UN RÉCIPIENT EN MATIÈRE PLASTIQUE, FABRICATION DU PRÉFORMÉ ET RÉCIPIENT EN MATIÈRE PLASTIQUE FABRIQUÉ À PARTIR DU PRÉFORMÉ AINSI QUE SA FABRICATION

(30) Priorität: 06.02.2015 CH 1592015
(43) Veröffentlichungstag der Anmeldung: 13.12.2017
(73) Patentinhaber: Alpla-Werke Alwin Lehner GmbH und Co. KG, 6971 Hard (AT)
(72) Erfinder: SIEGL, Robert, 6850 Dornbirn (AT)
(74) Vertreter: Bohest AG Branch Ostschweiz
(86) Internationale Anmeldenummer: PCT/EP2016/051128
(87) Internationale Veröffentlichungsnummer: WO 2016/124403

(56) Entgegenhaltungen:
- WO-A1-2013/055860
- WO-A1-2013/062408
- WO-A1-2014/032731
- WO-A1-2015/015243
- WO-A1-2015/031907
- WO-A1-2015/031910

## Beschreibung

Die Erfindung betrifft einen Preform zur Herstellung eines Kunststoffbehälters gemäss dem Oberbegriff des Patentanspruchs 1. Die Erfindung betrifft auch die Herstellung des Preforms sowie einen aus dem Preform hergestellten Kunststoffbehälter und dessen Herstellung.

Die in der Vergangenheit üblichen Behältnisse aus Weiss- oder Buntblech, aus Glas oder auch aus Keramik werden in zunehmendem Mass von Behältnissen aus Kunststoff abgelöst. Insbesondere für die Verpackung fluider Substanzen, beispielsweise von Getränken, fliessfähigen Lebensmitteln wie z.B. Ketchup, Sugo, Pesto, Saucen, Senf, Mayonnaise und dergleichen, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien, die Verwendung von Biokunststoffen und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Eine grosse Zahl der heutzutage eingesetzten Kunststoffflaschen und dergleichen Kunststoffbehälter wird in einem Streckblasverfahren hergestellt. Bei diesem Verfahren wird zunächst ein sogenannter Preform von üblicherweise länglicher, röhrchenartiger Gestalt hergestellt, der an seinem einen Längsende mit einem Boden verschlossen ist und am anderen Längsende einen Halsabschnitt mit Mitteln zur formschlüssigen Festlegung eines mit korrespondierenden Eingriffsmitteln ausgestatteten Verschlussteils aufweist. Die Mittel zur formschlüssigen Festlegung eines Verschlussteils können beispielsweise an der Aussenwandung des Halsteils ausgebildete Gewindeabschnitte oder bajonettartige Vorsprünge oder entsprechende Vertiefungen sein. Die Herstellung des Preforms erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms kann zeitlich und/oder räumlich getrennt vom nachfolgenden Streckblasverfahren erfolgen. In einem alternativen Verfahren wird der hergestellte Preform ohne zwischenzeitliche Abkühlung unmittelbar nach seiner Herstellung weiter verarbeitet. Zum Streckblasen wird der Preform in eine Formkavität einer Blasform eingesetzt und durch ein mit Überdruck eingebrachtes Fluid, üblicherweise Luft, in radialer und axialer Richtung aufgeweitet, insbesondere aufgeblasen. Dabei wird der Preform zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt.

Das für die Herstellung der Preforms und der daraus gefertigten Kunststoffbehälter vielfach eingesetzten Polyethylenterephthalat (PET) weist wegen der üblicherweise eher zufälligen Anordnung der Moleküle nur relativ niedrige mechanische Festigkeiten und auch nur relativ schlechte Barriereeigenschaften auf. Beim nachfolgenden Streckblasverfahren kommt es zu einer Streckverfestigung des PET, welche zu einer Annährung sowie zu einer parallelen Ausrichtung der Moleküle führt. Intermolekulare Wechselwirkungen der einander angenäherten Moleküle und der parallel zueinander ausgerichteten Molekülketten führen zu einer deutlichen Verbesserung der mechanischen Festigkeiten der eingesetzten Kunststoffe.

Die vorteilhaften Effekte der Streckverfestigung treten bei dem üblicherweise für die Herstellung Kunststoffbehältern eingesetzten PET relativ spät auf. Die daraus resultierenden langen Reckwege stellen bei der radialen und axialen Verstreckung eine nicht unerhebliche technische Herausforderung dar. Um bei PET diese hohen Streckraten zu erzielen, muss der Preform relativ kleine Abmessungen haben. Typischerweise beträgt die Länge des Preforms etwa 10 cm und weist dieser einen Durchmesser von etwa 2 cm auf. Der aus dem Preform im Streckblasverfahren hergestellte PET-Behälter ist hingegen vielfach relativ gross und weist im Fall einer typischen Mineralwasser- oder Softdrinkflasche beispielsweise eine Länge von etwa 24cm und eine Breite von etwa 7cm auf. Wegen der hohen Streckraten weist der verstreckte PET-Behälter nur relativ geringe Wandstärken auf, was sich negativ auf die Barriereeigenschaften des PET-Behälters insbesondere gegenüber Sauerstoff und Wasser auswirkt.

In der WO 2015/015243 A1 ist ein Kunststoffbehälter beschrieben, der in einem Streckblasverfahren aus einem Preform aus Polyethylenfuranoat hergestellt ist. Der Druckschrift sind jedoch keine Angaben bezüglich der rheologischen Eigenschaften, insbesondere hinsichtlich der Viskosität und des Wassergehalts des eingesetzten Kunststoffs zu entnehmen.

Aufgabe der vorliegenden Erfindung ist es daher, einen Preform zu schaffen, der bei den für die Erzielung der geforderten mechanischen Festigkeiten nötigen Streckraten im Streckblasverfahren zu einem Kunststoffbehälter führt, der immer noch ausreichend grosse Barriereeigenschaften gegenüber Sauerstoff und Wasser aufweist.

Die Lösung dieser Aufgabe besteht in einem Preform, der die im Patentanspruch 1 angeführten Merkmale aufweist, und in einem Verfahren zur Herstellung des Preforms, welches die im unabhängigen Verfahrensanspruch angeführten Merkmale aufweist. Die Aufgabe wird weiters durch einen Kunststoffbehälter gelöst, welcher in einem Streckblasverfahren aus einem erfindungsgemässen Preform hergestellt worden ist. Weiterbildungen und/oder vorteilhafte Ausführungsvarianten der Erfindung sind Gegenstand der abhängigen Patentansprüche.

Durch die Erfindung wird ein Preform zur Herstellung eines Kunststoffbehälters in einem Streckblasverfahren geschaffen, der einen länglichen, röhrchenartigen Preformkörper besitzt, der an seinem einen Längsende mit einem Preformboden verschlossen ist und an seinem anderen Längsende einen Preformhals aufweist. Der Preform besteht wenigstens bereichsweise aus Polyethylenfuranoat (PEF), welches bei der Herstellung des Preforms eine Viskosität von 0,75 dl/g bis 0,9 dl/g gemessen nach einer Messmethode gemäss der ASTM D4603, und einen Wassergehalt von weniger als 50 ppm aufweist.

Polyethylenfuranoat (PEF) weist in vielen Aspekten seiner Herstellung und seiner Verarbeitbarkeit grosse Ähnlichkeiten zum hinlänglich bekannten Polyethylenterephthalat (PET) auf. Wie PET erreicht PEF die erforderliche mechanische Festigkeit durch die Streckverfestigung des Preforms beim Streckblasen zur Herstellung eines Behälters. Während PET jedoch wegen der Wandstärkenverringerung infolge zunehmender Verstreckung relativ schlechte Barriereeigenschaften gegenüber Sauerstoff, Kohlendioxid oder Wasser aufweist, treten diese Nachteile bei PEF in deutlich geringerem Ausmass auf.

PEF weist gegenüber Sauerstoff Barriereeigenschaften auf, die etwa um den Faktor 6 bis 10 höher sind als bei PET gleicher Wandstärke. Die Barriereeigenschaften gegenüber Kohlendioxid sind etwa um den Faktor 3 bis 6 grösser als bei PET. Schliesslich weist PEF auch gegenüber Wasser Barriereeigenschaften auf, die etwa doppelt so hoch sind als bei PET.

Damit die angestrebte mechanische Festigkeit und die gewünschten Barriereeigenschaften des später aus dem hergestellten Preform streckgeblasenen Behälters erreicht werden können, wird bereits für die Herstellung des Preforms darauf geachtet, dass eine optimale molekulare Länge der PEF Ketten erzielt wird. Deshalb wird für die Herstellung der Preforms eine Viskosität des PEF eingestellt, die 0,75 dl/g bis 0,9 dl/g beträgt. Die Viskosität wird dabei nach einer Messmethode analog der ASTM D4603 bestimmt. Diese genormte Messmethode wurde zwar für die Ermittlung der Viskosität von PET entwickelt, ist jedoch in analoger Form auf PEF anwendbar. Das zum Preform verarbeitete PEF weist dabei einen Wassergehalt von weniger als 50 ppm auf. Dazu wird das PEF vor seiner Verarbeitung getrocknet. Beispielsweise wird das PEF dazu während 20 Stunden bei 150°C und einem Luft Taupunkt unter -30°C getrocknet. Die Trocknung kann durch die Erhöhung der Temperatur beschleunigt werden, jedoch empfiehlt sich dabei ein Rührwerk oder eine entsprechende Vorrichtung einzusetzen, um ein Verkleben des PEF Materials zu vermeiden. Zusätzlich kann auch noch Energie durch Infrarot- oder Mikrowellenstrahlung eingebracht werden, um die Trocknungszeit weiter zu verkürzen. Schliesslich kann die Trocknung des PEF auch noch im Vakuum erfolgen. Die Einstellung der Viskosität und des Wassergehalts des PEF vor seiner Verarbeitung zum Preform sorgen für den Erhalt der molekularen Struktur des PEF und insbesondere seiner Kettenlänge. Durch die Trocknung des PEF wird der hydrolytische Abbau der Ketten reduziert, und es kann eine Kettenspaltung des PEF durch Hydrolyse, beispielsweise bei einem Spritzgiessen des PEF unterdrückt werden. Die Aufbereitung des PEF sollte dabei möglichst zeitnah zu dessen Weiterverarbeitung zu einem Preform erfolgen, da sonst oxidative Abbaureaktionen das PEF schädigen. Als zeitnah im Sinne der vorliegenden Erfindung wird dabei ein Zeitraum von bis zu Stunden nach der Aufbereitung des PEF angesehen. Das für die Herstellung des Preforms eingesetzte PEF kann dabei einen linearen Kettenaufbau aufweisen oder auch kleinere oder größere Verzweigungen enthalten.

In einer Ausführungsvariante des Preforms kann der gesamte Preform einschliesslich des Preformhalses, der in einem nachfolgenden Streckblasverfahren oftmals nicht verstreckt wird, aus PEF bestehen.

In einer weiteren Ausführungsvariante des Preforms kann das zu seiner Herstellung eingesetzte PEF 10% bis 100% bio-basiertes PEF umfassen. Die Verwendung von bio-basiertem PEF ist aus ökologischen Gründen erstrebenswert, da für die Herstellung des PEF ausschliesslich erneuerbare Stoffe zum Einsatz kommen.

In einer Ausführungsvariante des Preforms kann das zu seiner Herstellung eingesetzte PEF bis zu 100% Regeneratmaterial umfassen. Infolge der eingesetzten Herstellverfahren und der für die Trocknung und Weiterverarbeitung des PEF eingesetzten Temperaturen spielen allfällige Verunreinigungen mit anderen Stoffen, insbesondere mit Fremdpolymeren, eine untergeordnete Rolle. Daher können Preforms, die Regeneratmaterial enthalten, und die daraus hergestellten Behälter ohne Einschränkungen in direkten Kontakt mit dem Füllgut kommen.

Eine weitere Ausführungsvariante des Preforms kann vorsehen, dass das PEF physikalisch oder chemisch geschäumt ist. Dabei kann das PEF einen Schäumungsgrad von 10 % bis 30 % aufweisen. Die Schäumung des PEF kann dabei innerhalb der Formkavität oder auch bereits in einem Schmelzespeicher vor der eigentlichen Einspritzung in die Spritzgiessform zur Herstellung des Preforms erfolgen.

In einer Ausführungsvariante des Preforms kann das für seine Herstellung eingesetzte PEF in einem Solid State Polykondensations (SSD)-Verfahren oder in einem Melt to Resin (MTR)-Verfahren hergestellt sein. Für die Herstellung wird dabei ein Katalysator gewählt, der aus der Gruppe bestehend aus Alkalimetallen, Erdalkalimetallen, Übergangsmetallen oder Metallen des Periodensystems der Elemente entstammt. Typischerweise wird der Katalysator als Salz, Oxid, Glykolat oder Komplex dieser Elemente eingesetzt.

In einer weiteren Ausführungsvariante des Preforms kann das PEF bis zu 20 Gewichtsprozent Fremdstoffe umfassen. Als Fremdstoffe im Sinne der vorliegenden Erfindung werden dabei Farbstoffe, Füllstoffe, Stabilisierungszusätze wie z.B. Glasfasern oder Glaskugeln oder Mischungen daraus, Additive oder Fremdpolymere angesehen.

Eine Ausführungsvariante des Preforms kann vorsehen, dass das zu seiner Herstellung eingesetzte PEF mit weiteren Kunststoffen gemischt ist. Diese weiteren Kunststoffe können aus der Gruppe bestehend aus PET, Polyester, Polyamid, Polycarbonat, Polyolefine, Silicone deren Copolymere und Mischungen der Kunststoffe gewählt sein.

Damit es nicht zu einer hydrolytischen Aufspaltung der Kettenlängen kommt, kann das PEF beispielsweise bei einer Trocknungstemperatur von 100°C bis 160°C getrocknet werden. Alternativ kann das PEF bei Verwendung von speziellen Rührmechanismen, die ein Verkleben des PEFs vermeiden und allfällige Verklebungen wieder lösen, auch bei Temperaturen von grösser 160°C bis zu 220°C getrocknet werden. Ab einer Temperatur von 220°C ist trotz Rührwerk und allfälligen speziellen Beschichtungen der Granulatkörner ein normaler fluidbetriebener Trocknungsprozeß nicht mehr möglich, da das PEF anfängt aufzuschmelzen. Der Trocknungsprozess des PEF kann durch die Zufuhr von Energie in Form von Mikrowellenstrahlung unterstützt werden und kann sogar unter Vakuum erfolgen.

Für die Herstellung des Preforms kann das PEF auf eine Verarbeitungstemperatur grösser als die Schmelztemperatur jedoch kleiner als 290°C, gemessen am Ausgang eines Extruders zur Förderung des PEF zur Herstellvorrichtung für den Preform, erwärmt werden. Typischerweise wird das PEF auf Temperaturen zwischen 220°C und 290°C erwärmt. Diese Temperaturen gelten für die Weiterverarbeitung des PEF im Spritzgiessverfahren, im Extrusionsblasverfahren oder im Fliesspressverfahren.

In einer Ausführungsvariante der Erfindung kann der Preform in einem Spritzgiessverfahren in einer Formkavität mit einem Heisskanalsystem mit einem Nadelverschluss von 3,9 mm bis 6,1 mm hergestellt werden. Vorzugsweise beträgt der Durchmesser des Nadelverschlusses 4,5 mm bis 5,5 mm. Bei derartigen Heisskanalsystemen mit grösserem Nadelverschluss können auch relativ zähe PEF Schmelzen mit relativ hoher Viskosität in die Form eingespritzt werden. Dadurch kann der Spritzgiessprozess bei tieferen Temperaturen durchgeführt werden. Dies führt zu geringeren Verweilzeiten unter hoher Temperatur der PEF Schmelze in der Spritzgiessanlage. Dadurch kann einem thermischen Abbau der PEF Molekülketten entgegengewirkt werden. Lange Molekülketten des PEF werden angestrebt, um die Streckverfestigung zu begünstigen.

In einer weiteren Ausführungsvariant kann ein thermisch oxidativer Abbau des PEF im Extruder durch ein Verdrängen des Sauerstoffs beispielsweise durch Stickstoff am Einzug des Extruders unterdrückt werden. Durch den Mangel an Sauerstoff können oxidative Abbauprozeße reduziert werden, die Vergilbung nimmt ab und der Zeitraum, das PEF zusammen mit anderen Polyestern durch Umesterung zu copolimerisieren, steigt. Eine Copolymerisation kann von Vorteil sein, um andere Ester in die PEF Molekülketten aufzunehmen und so die Eigenschaften des PEF im gewünschten Umfang zu modifizieren. Beispielsweise kann eine Copolimerisation des PEF mit PET, PBT, PEN, PLA von Interesse sein.

In einer Ausführungsvariante des Verfahrens zur Herstellung des Preforms im Spritzgiessverfahren kann das PEF mit einer Geschwindigkeit von 11 g/sec bis 30 g/sec in die Spritzgiessform eingebracht werden. Der schnelle Spritzgiessprozeß kann insbesondere bei dünnwandigen Preforms zu einer gewissen Materialorientierung führen, welche wiederum bei der Streckverfestigung im nachfolgenden Streckblasverfahren von Vorteil ist, da die Molekülketten bereits vororientiert sind

Eine weitere Verfahrensvariante kann vorsehen, dass PEF mit einem Schmelzedruck von 700 bar bis 3000 bar in die Formkavität der Spritzgiessform eingebracht wird. Dieser Druck wird üblicherweise an der Schneckenspitze des Zuführextruders bzw. im dem Spritzaggregat vorgelagerten Schmelzespeicher gemessen. Dies erlaubt die Verarbeitung von zähflüssigeren PEF Schmelzen, was sich vorteilhaft auf den thermischen Abbau der Molekülketten auswirken kann.

In einer alternativen Herstellvariante kann der Preform in einem Extrusionsblasverfahren hergestellt werden. Das Extrusionsblasverfahren erlaubt höhere Freiheitsgrade hinsichtlich der Formgebung des Preforms. Insbesondere entfällt ein Spritzkern, der entformt werden muss. Dadurch kann der Preform in seinem Inneren auch Hinterschneidungen aufweisen. An dieser Stelle sei darauf hingewiesen, dass der Preform prinzipiell auch beim Spritzgiessen mit Hinterschneidungen in seinem Inneren ausgebildet sein kann. Allerdings erfordert dies eine komplexere Anlagenausstattung, beispielsweise in Form eines Spreizkerns oder dergleichen. Dadurch werden aber die Stückkosten erhöht und oftmals auch die Zykluszeiten verlängert.

Eine Ausführungsvariante des Herstellverfahrens des Preforms im Extrusionsblasverfahren kann vorsehen, dass das PEF mit einem Extrusionsdruck von 100 bar bis 300 bar in einen Extrusionskanal eines Extruderkopfes eingebracht wird. Der Extrusionsdruck bezieht sich dabei auf den Druck der PEF Schmelze unmittelbar vor dem Eintritt in den Extrusionskanal des Extrusionskopfes. Bei den gewählten Drücken können auch zähflüssigere PEF Schmelzen im Extrusionsblasverfahren verarbeitet werden. Die dadurch geringere Erwärmung der PEF Schmelze wirkt sich positiv auf die Verhinderung eines thermischen Abbaus der PEF Molekülketten aus.

In einer Verfahrensvariante kann das PEF durch eine Ringspaltdüse mit eine Weite von 1 mm bis 4 mm als Schlauch extrudiert werden, bevor ein Abschnitt des extrudierten Schlauchs in einer Formkavität einer Blasform durch ein mit Überdruck eingeblasenenes Medium zum Preform aufgeblasen wird.

In einer weiteren Verfahrensvariante zur Herstellung des Preforms, kann dieser auch in einem Fliesspressverfahren innerhalb einer Formkavität hergestellt werden.

Der im Spritzgiessverfahren, im Extrusionsblasverfahren oder im Fliesspressverfahren hergestellte Preform wird nach seiner Herstellung abgekühlt. Dazu kann der hergestellte Preform in einem ersten Schritt noch innerhalb der Formkavität auf eine Temperatur abgekühlt werden, die 30 °C bis 110°C unterhalb der Schmelztemperatur, jedoch über der Glasübergangstemperatur des PEF liegt.

In einer Verfahrensvariante kann der hergestellte Preform nach seiner Entnahme aus der Formkavität in einer Kühlhülse auf eine Temperatur seiner Aussenwandung von 40°C bis 70°C abgekühlt werden, bevor er zur Weiterverarbeitung oder zur Zwischenlagerung aus der Kühlhülse entfernt wird. Die Kühlhülse gewährleistet eine möglichst gleichmässige und schonende Abkühlung des Preforms. Ein Aneinanderkleben der Preforms oder eine Beschädigung der Preformaussenwandung kann dadurch vermieden werden.

Ein Kunststoffbehälter gemäss der Erfindung mit einem Behälterkörper, der mit einem Behälterboden verschlossen ist, und mit einem an den Behälterkörper anschliessenden Behälterhals mit einer Ausgiessöffnung zeichnet sich dadurch aus, dass er in einem Streckblasverfahren aus einem Preform, der gemäss der Erfindung hergestellt ist, gefertigt ist. Der Kunststoffbehälter besteht wenigstens zum Teil, vorzugsweise zur Gänze, aus streckverfestigtem PEF. PEF weist hinsichtlich seiner Verarbeitbarkeit und Streckverfestigung grosse Ähnlichkeiten zum hinlänglich bekannten PET auf. Während PET jedoch wegen der Wandstärkenverringerung infolge zunehmender Verstreckung relativ schlechte Barriereeigenschaften gegenüber Sauerstoff, Kohlendioxid oder Wasser aufweist, treten diese Nachteile bei PEF in deutlich geringerem Ausmass auf. PEF weist gegenüber Sauerstoff Barriereeigenschaften auf, die etwa um den Faktor 6 bis 10 höher sind als bei PET gleicher Wandstärke. Die Barriereeigenschaften gegenüber Kohlendioxid sind etwa um den Faktor 3 bis 6 grösser als bei PET. Schliesslich weist PEF auch gegenüber Wasser Barriereeigenschaften auf, die etwa doppelt so hoch sind als bei PET.

Der aus einem PEF Preform streckgeblasene Kunststoffbehälter erreicht die geforderten mechanischen Festigkeiten bereits bei einem über die Oberflächenkontur gemessenen Streckverhältnis gegenüber dem Preform von 100% bis 1000%. Dies wird dadurch erreicht, dass die PEF Molekülketten infolge des speziellen Herstellverfahrens des Preforms bereits eine gewisse Vororientierung aufweisen. Beim Streckblasverfahren kommt es daher bereits relativ früh zu einer ausreichenden Annährung sowie zu einer ausreichenden parallelen Ausrichtung der PEF Molekülketten. Die verbesserten mechanischen Festigkeiten sind dann eine Folge der intermolekulare Wechselwirkungen der einander angenäherten und parallel zueinander ausgerichteten Molekülketten.

Das Erreichen der erforderlichen Streckverfestigung kann sich bei einem einen rotationssymmetrischen Behälterkörper aufweisenden Kunststoffbehälter darin äussern, dass er auf halber Höhe seines Behälterkörpers über den Umfang eine Wandstärkenverteilung aufweist, die nicht mehr als +/- 10% von einer Soll-Wandstärke abweicht.

Bei einem Kunststoffbehälter mit einem ovalen Behälterkörper mit einem Tiefe zu Breite Verhältnis von bis zu 1 : 2 kann sich das Erreichen der gewünschten Streckverfestigung darin äussern, dass dieser auf halber Höhe des Behälterkörpers über den Umfang eine Wandstärkenverteilung aufweist, die nicht mehr als +/- 25% von einer Sollwandstärke abweicht.

Bei einem Kunststoffbehälter, der einen sogenannten flachen Behälterkörper aufweist, dessen Verhältnis von Tiefe zu Breite kleiner ist als 1:2 jedoch grösser als 1 : 10, kann sich das Erreichen der gewünschten Streckverfestigung darin äussern, dass er auf halber Höhe des Behälterkörpers über den Umfang eine Wandstärkenverteilung aufweist, die nicht mehr als +/- 50% von einer Sollwandstärke abweicht.

Als ein weiteres Indiz für das Erreichen der gewünschten Streckverfestigung kann herangezogen werden, dass der PEF Kunststoffbehälter bei Befüllung mit einem CO₂-hältigen Füllgut und einem CO₂ Gehalt bei 23°C von 4 bis 10 g/l bei einer Temperaturerhöhung auf 38°C innerhalb von 24 Stunden nur einen Volumenszuwachs erleidet, der kleiner ist als 10%.

Bei im befüllten Zustand mit einem Inertgas, insbesondere Stickstoff, befüllten PEF Kunststoffbehältern, welches bei 23°C zu einem Innendruck von 0,2 bar bis 2 bar führt, kann das Erreichen der gewünschten Streckverfestigung daran kontrolliert werden, dass der Kunststoffbehälter bei Erhöhung der Temperatur auf 38°C innerhalb von 24 Stunden nur einen Volumenszuwachs erleidet, der kleiner ist als 10%.

Ein ausreichend streckverfestigter Kunststoffbehälter, der als ein Druckbehälter aus einem wenigstens zum Teil aus PEF bestehenden Preform streckgeblasen ist, kann eine Druckbeständigkeit von wenigstens 100% über dem Fülldruck bei 23°C aufweisen. Dadurch ist in der Regel sichergestellt, dass der Kunststoffbehälter bei bestimmungsgemässem Gebrauch weder beim Befüllen noch bei der späteren Handhabung durch den Konsumenten versagt.

Zur Herstellung eines Kunststoffbehälters aus einem erfindungsgemäss gefertigten Preform in einem Streckblasverfahren wird der Preform nach der Erwärmung seines Preformkörpers auf eine Verarbeitungstemperatur, die 5°C bis 25°C über der Glasübergangstemperatur des PEF liegt, in eine Formkavität einer Blasform einsetzt und durch ein mit Überdruck eingeblasenes Blasmedium aufgeblasen und dabei mittels eines Reckdorns axial verstreckt. Danach wird der biaxial verstreckte Kunststoffbehälter aus der Blasform entformt.

Für das Streckblasen des Preforms ist es wichtig, dass der Preform möglichst wenig Wasser aufgenommen hat und auch möglichst keine sonstigen Moleküle, wie Waxe, Öle etc., wie diese oft für Farbmasterbatches verwendet werden, enthält. Dadurch kann auch bei kleinen Streckraten und Reckgeschwindigkeiten ein Abrutschen der Molekülketten verhindert werden. Die Erwärmung des Preforms dient somit auch zur Trocknung und zur Verdampfung der erwähnten Fremdstoffe. Andererseits wird der Streckblasprozess des Preforms so kalt wie gerade möglich durchgeführt. Je kälter der in die Formkavität eingesetzte Preform ist, desto früher setzt die Streckverfestigung des PEF Materials ein. Bei der gewählten Temperatur des Preforms können beide Anforderungen zur Zufriedenheit erfüllt werden. Die Temperatur bezieht sich dabei sowohl auf die Aussenwandung als auch auf die Innenwandung des Preforms und wird auf 5°C bis 25°C über der Glasübergangstemperatur eingestellt. Idealerweise beträgt die Temperatur des Preforms zwischen 105°C und 145°C.

In einer Verfahrensvariante kann die axiale Verstreckung des Preforms mit einer Reckdorngeschwindigkeit von 0,5 m/s bis 3 m/s erfolgen. Die axiale Vorschubgeschwindigkeit des Reckdorns erfolgt dabei so schnell, dass das Vorderende des Reckdorns sich immer im Kontakt zu der aus dem Preform gebildeten Blase befindet und sich bei der Ausbreitung der Blase durch das mit Druck eingebrachte Fluid während des Blasprozeßes gleich schnell bewegt wie die Blase.

Das Blasmedium, üblicherweise Luft, kann in einer weiteren Verfahrensvariante in zwei Stufen eingebracht werden. In einer ersten Stufe wird das Blasmedium mit einer ersten Strömungsgeschwindigkeit von 0,02 l/s bis 5 l/s in die Formkavität eingebracht wird. Gleichzeitig wird der Reckdorn so schnell axial vorgeschoben, dass er sich nicht von der durch das eingeblasene Blasmedium aus dem Preform gebildeten Blase löst. Die Vorschubgeschwindigkeit des Reckdorns entspricht somit der Längsausdehnung der aus dem Preform gebildeten Blase. Sobald die Blase am Boden der Formkavität anliegt wird in einer zweiten Stufe das Blasmedium dann mit einer zweiten Strömungsgeschwindigkeit von 0,5 l/s bis 10 l/s eingeblasen, bis die aus dem Preform gebildete Blase an den die Formkavität begrenzenden Innenwandungen der Blasform anliegt.

Der Druck, mit dem das Blasmedium in den Preform eingeblasen wird, kann 5 bar bis 50 bar betragen.

Für eine gleichmässig schnelle Verstreckung des PEF Preforms ist es wichtig, dass seine Ausdehnung nicht durch einen Gegendruck behindert wird, um den PEF Molekülketten keine Zeit zum Abrutschen, Fliessen oder Ausfädeln zu geben. Dieser Gegendruck kann dadurch vermieden werden, dass die Formkavität der Blasform mit einer Strömungsgeschwindigkeit von 0,02 l/s bis 5 l/s entlüftet wird. Zu diesem Zweck können in der Blasform entsprechende Entlüftungsbohrungen vorgesehen sein.

Streckgeblasene Kunststoffbehälter aus PEF Preforms können wie PET Behälter eingesetzt werden. Dabei weist das PEF gegenüber dem PET bei vergleichbaren Wandstärken die deutlich besseren Barriereeigenschaften gegenüber Sauerstoff, Kohlendioxid und Wasser auf. Kunststoffbehälter aus PEF können daher vielfach ohne zusätzliche Schichten aus Fremdpolymeren oder auf Additive, beispielsweise zur Erhöhung der Sauerstoffbarriere, hergestellt werden. Dies, die Tatsache, dass PEF zur Gänze aus biologischen und erneuerbaren Grundstoffen herstellbar ist, und die vollständige Recyklierbarkeit erhöhen die ökologischen Vorteile von PEF Behältern gegenüber vergleichbaren Behältern beispielsweise aus PET.

## Patentansprüche

1. Preform zur Herstellung eines Kunststoffbehälters in einem Streckblasverfahren mit einem länglichen, röhrchenartigen Preformkörper (2), der an seinem einen Längsende mit einem Preformboden (3) verschlossen ist und an seinem anderen Längsende einen Preformhals (4) aufweist, wobei der Preform wenigstens bereichsweise aus Polyethylenfuranoat (PEF) besteht,
**dadurch gekennzeichnet, dass** das Polyethylenfuranoat (PEF) bei der Herstellung des Preforms eine Viskosität von 0,75 dl/g bis 0,9 dl/g gemessen nach einer Messmethode gemäss ASTM D4603 und einen Wassergehalt von weniger als 50 ppm aufweist.

2. Preform nach Anspruch 1, **dadurch gekennzeichnet, dass** das PEF zu 10% bis 100% bio-basiertes PEF umfasst.

3. Preform nach Anspruch 1 oder 2, **dadurch gekennzeichnet, dass** das PEF bis zu 100% Regeneratmaterial umfasst.

4. Preform nach einem der Ansprüche 1 bis 3, **dadurch gekennzeichnet, dass** das PEF physikalisch oder chemisch geschäumt ist und einen Schäumungsgrad von 10 % bis 30 % aufweist.

5. Preform nach einem der vorangehenden Ansprüche, **dadurch gekennzeichnet, dass** das PEF in einem Solid State Polykondensations (SSD)-Verfahren oder in einem Melt to Resin (MTR)-Verfahren hergestellt ist, mit einem Katalysator gewählt aus der Gruppe bestehend aus Alkalimetallen, Erdalkalimetallen, Übergangsmetallen oder Metallen des Periodensystems der Elemente, typischerweise als Salz, Oxid oder Komplex dieser Elemente.

6. Preform nach einem der vorangehenden Ansprüche, **dadurch gekennzeichnet, dass** das PEF bis zu 20 Gewichtsprozent Fremdstoffe umfasst.

7. Preform nach Anspruch 6, **dadurch gekennzeichnet, dass** das PEF Farbstoffe, Stabilisierungszusätze wie z.B. Glasfasern oder Glaskugeln oder Mischungen daraus, Additive oder Fremdpolymere umfasst.

8. Preform nach einem der vorangehenden Ansprüche, **dadurch gekennzeichnet, dass** das PEF mit weiteren Kunststoffen gemischt ist.

9. Preform nach Anspruch 8, **dadurch gekennzeichnet, dass** die weiteren Kunststoffe aus der Gruppe bestehend aus PET, Polyester, Polyamid, Polycarbonat, Polyolefine, Silicone, deren Copolymere und Mischungen der Kunststoffe gewählt sind.

10. Verfahren zur Herstellung eines Preforms gemäss Anspruch 1, **dadurch gekennzeichnet, dass** das PEF bei einer Trocknungstemperatur getrocknet wird, welche 100°C bis 160°C beträgt.

11. Verfahren zur Herstellung eines Preforms gemäss Anspruch 1, **dadurch gekennzeichnet, dass** das PEF bei einer Temperatur von grösser 160°C bis zu 220°C getrocknet und während des Trocknungsvorgangs mit einem Rührwerk agitiert wird.

12. Verfahren nach Anspruch 10 oder 11, **dadurch gekennzeichnet, dass** der Trocknungsprozess des PEF durch die Zufuhr von Energie in Form von Mikrowellenstrahlung unterstützt wird.

13. Verfahren nach einem der Ansprüche 10 bis 12, **dadurch gekennzeichnet, dass** die Trocknung des PEF unter Vakuum oder einem Sauerstoff verdrängenden nichtoxidativen Gas erfolgt.

14. Verfahren nach einem der Ansprüche 10 bis 13, **dadurch gekennzeichnet, dass** das PEF für die Herstellung des Preforms auf eine Verarbeitungstemperatur grösser als die Schmelztemperatur jedoch kleiner als 290°C, gemessen am Ausgang eines Extruders zur Förderung des PEF zur Herstellvorrichtung für den Preform, erwärmt wird.

15. Verfahren nach einem der Ansprüche 10 bis 14, **dadurch gekennzeichnet, dass** der Preform in einem Spritzgiessverfahren in einer Formkavität mit einem Heisskanalsystem mit einem Nadelverschluss von 3,9 mm bis 6,1 mm, vorzugsweise 4,5 mm bis 5,5 mm, hergestellt wird.

16. Verfahren nach Anspruch 15, **dadurch gekennzeichnet, dass** das PEF mit einer Geschwindigkeit von 11 g/sec bis 30 g/sec in eine Spritzgiessform eingebracht wird.

17. Verfahren nach Anspruch 15 oder 16, **dadurch gekennzeichnet, dass** das PEF mit einem Schmelzedruck von 700 bar bis 3000 bar in eine Spritzgiessform eingebracht wird.

18. Verfahren nach einem der Ansprüche 10 bis 14, **dadurch gekennzeichnet, dass** der Preform in einem Extrusionsblasverfahren hergestellt wird.

19. Verfahren nach Anspruch 18, **dadurch gekennzeichnet, dass** das PEF mit einem Extrusionsdruck von 100 bar bis 300 bar in einen Extrusionskanal eines Extruderkopfes eingebracht wird.

20. Verfahren nach Anspruch 18 oder 19, **dadurch gekennzeichnet, dass** das PEF durch eine Ringspaltdüse mit eine Weite von 1 mm bis 4 mm als Schlauch extrudiert wird, bevor ein Abschnitt des extrudierten Schlauchs in einer Formkavität einer Blasform durch ein mit Überdruck eingeblasenenes Medium zum Preform aufgeblasen wird.

21. Verfahren nach einem der Ansprüche 10 bis 14, **dadurch gekennzeichnet, dass** der Preform in einem Fliesspressverfahren innerhalb einer Formkavität hergestellt wird.

22. Verfahren nach einem der Ansprüche 10 bis 21, **dadurch gekennzeichnet, dass** der hergestellte Preform innerhalb der Formkavität auf eine Temperatur abgekühlt wird, die 30 °C bis 110 °C unterhalb der Schmelztemperatur jedoch über der Glasübergangstemperatur des PEF liegt.

23. Verfahren nach Anspruch 22, **dadurch gekennzeichnet, dass** der hergestellte Preform nach seiner Entnahme aus der Formkavität in einer Kühlhülse auf eine Temperatur seiner Aussenwandung von 40°C bis 70°C gekühlt wird, bevor er zur Weiterverarbeitung oder zur Zwischenlagerung aus der Kühlhülse entfernt wird.

24. Kunststoffbehälter mit einem Behälterkörper, der mit einem Behälterboden verschlossen ist, und mit einem an den Behälterkörper anschliessenden Behälterhals mit einer Ausgiessöffnung, **dadurch gekennzeichnet, dass** er in einem Streckblasverfahren aus einem Preform, der gemäss einem der Ansprüche 10 bis 23 hergestellt ist, gefertigt ist.

25. Kunststoffbehälter nach Anspruch 24, **dadurch gekennzeichnet, dass** er gegenüber dem Preform ein über die Oberflächenkontur gemessenes Streckverhältnis von 100% bis 1000% aufweist.

26. Kunststoffbehälter nach Anspruch 24 oder 25, **dadurch gekennzeichnet, dass** er auf halber Höhe seines Behälterkörpers einer einen rotationssymmetrischen Querschnitt aufweist und in diesem Bereich über den Umfang eine Wandstärkenverteilung aufweist, die nicht mehr als +/- 10% von einer Soll-Wandstärke abweicht.

27. Kunststoffbehälter nach Anspruch 24 oder 25, **dadurch gekennzeichnet, dass** er einen ovalen Behälterkörper mit einem Tiefe zu Breite Verhältnis von bis zu 1 : 2 aufweist und auf halber Höhe des Behälterkörpers über den Umfang eine Wandstärkenverteilung aufweist, die nicht mehr als +/- 25% von einer Sollwandstärke abweicht.

28. Kunststoffbehälter nach Anspruch 24 oder 25, **dadurch gekennzeichnet, dass** er einen flachen Behälterkörper aufweist, dessen Verhältnis von Tiefe zu Breite kleiner ist als 1:2 jedoch grösser als 1 : 10, und dass er auf halber Höhe des Behälterkörpers über den Umfang eine Wandstärkenverteilung aufweist, die nicht mehr als +/- 50% von einer Sollwandstärke abweicht.

29. Kunststoffbehälter nach einem der Ansprüche 24 bis 28, **dadurch gekennzeichnet, dass** er bei Befüllung mit einem CO₂-hältigen Füllgut und einem CO₂ Gehalt bei 23°C von 4 bis 10 g/l bei einer Temperaturerhöhung auf 38°C innerhalb von 24 Stunden einen Volumenszuwachs erleidet, der kleiner ist als 10%.

30. Kunststoffbehälter nach einem der Ansprüche 24 bis 28, **dadurch gekennzeichnet, dass** er in befülltem Zustand und bei einem Innendruck von 0,2 bar bis 2 bar eines Inertgases, insbesondere Stickstoff, bei 23°C bei Erhöhung der Temperatur auf 38°C innerhalb von 24 Stunden einen Volumenszuwachs erleidet, der kleiner ist als 10%.

31. Kunststoffbehälter nach einem der Ansprüche 24 bis 30, **dadurch gekennzeichnet, dass** er als ein Druckbehälter ausgebildet ist und eine Druckbeständigkeit von wenigstens 100% über dem Fülldruck bei 23°C aufweist.

32. Verfahren zur Herstellung eines Kunststoffbehälters gemäss einem der Ansprüche 24 bis 31, **dadurch gekennzeichnet, dass** der Preform nach der Erwärmung seines Preformkörpers auf eine Verarbeitungstemperatur, die 5°C bis 25°C über der Glasübergangstemperatur des PEF liegt, in eine Formkavität einer Blasform einsetzt und durch ein mit Überdruck eingeblasenes Blasmedium aufgeblasen, dabei mittels eines Reckdorns axial verstreckt und danach aus der Blasform entformt wird.

33. Verfahren nach Anspruch 32, **dadurch gekennzeichnet, dass** die axiale Verstreckung des Preforms mit einer Reckdorngeschwindigkeit von 0,5 m/s bis 3 m/s erfolgt.

34. Verfahren nach Anspruch 33, **dadurch gekennzeichnet, dass** das Blasmedium in einer ersten Stufe mit einer ersten Strömungsgeschwindigkeit von 0,02 l/s bis 5 l/sec in die Formkavität eingebracht wird und danach in einer zweiten Stufe mit einer zweite Strömungsgeschwindigkeit von 0,05 l/s bis 5 l/s eingeblasen wird.

35. Verfahren nach Anspruch 34, **dadurch gekennzeichnet, dass** die Formkavität der Blasform mit einer Strömungsgeschwindigkeit von 0,02 l/s bis 5 l/s entlüftet wird.

36. Verfahren nach einem der Ansprüche 32 bis 35, **dadurch gekennzeichnet, dass** das Blasmedium mit einem Druck von 5 bar bis 50 bar in den Preform eingebracht wird.

## Claims

1. Preform for the production of a plastics container in a stretch blow molding process with an elongate, tubular preform body (2) closed at one of its longitudinal ends by a preform base (3) and having at its other longitudinal end a preform neck (4), where the preform consists at least in some regions of polyethylene furanoate (PEF), **characterized in that** during the production of the preform the viscosity of the polyethylene furanoate (PEF) is from 0.75 dl/g to 0.9 dl/g measured by a measurement method in accordance with ASTM D4603, and the water content thereof is less than 50 ppm.

2. Preform according to Claim 1, **characterized in that** the PEF comprises from 10% to 100% of biobased PEF.

3. Preform according to Claim 1 or 2, **characterized in that** the PEF comprises up to 100% of regrind material.

4. Preform according to any of Claims 1 to 3, **characterized in that** the PEF has been physically or chemically foamed, and its degree of foaming is from 10% to 30%.

5. Preform according to any of the preceding claims, **characterized in that** the PEF has been produced in a solid state polycondensation (SSD) process or in a melt to resin (MTR) process with a catalyst selected from the group consisting of alkali metals, alkaline earth metals, transition metals and metals of the periodic table of the elements, typically in the form of salt, oxide or complex of said elements.

6. Preform according to any of the preceding claims, **characterized in that** the PEF comprises up to 20 percent by weight of foreign substances.

7. Preform according to Claim 6, **characterized in that** the PEF comprises dyes, stabilizing additions such as glass fibers or glass beads or mixtures thereof, additives or foreign polymers.

8. Preform according to any of the preceding claims, **characterized in that** the PEF has been mixed with other plastics.

9. Preform according to Claim 8, **characterized in that** the other plastics are selected from the group consisting of PET, polyester, polyamide, polycarbonate, polyolefins, silicones, copolymers thereof and mixtures of the plastics.

10. Process for the production of a preform according to Claim 1, **characterized in that** the PEF is dried at a drying temperature which is from 100°C to 160°C.

11. Process for the production of a preform according to Claim 1, **characterized in that** the PEF is dried at a temperature of from above 160°C to 220°C, and during the drying procedure is agitated by use of a mixer.

12. Process according to Claim 10 or 11, **characterized in that** the procedure for drying the PEF is assisted by the introduction of energy in the form of microwave radiation.

13. Process according to any of Claims 10 to 12, **characterized in that** the drying of the PEF takes place in vacuo or in a non-oxidative gas that displaces oxygen.

14. Process according to any of Claims 10 to 13, **characterized in that** the PEF for the production of the preform is heated to a processing temperature which, measured at the outlet of an extruder for the conveying of the PEF to the production device for the preform, is above the melting point but below 290°C.

15. Process according to any of Claims 10 to 14, **characterized in that** the preform is produced in an injection-molding process in a mold cavity with a hot-runner system with a needle valve measuring from 3.9 mm to 6.1 mm, preferably from 4.5 mm to 5.5 mm.

16. Process according to Claim 15, **characterized in that** the PEF is introduced at a rate of from 11 g/sec to 30 g/sec into an injection mold.

17. Process according to Claim 15 or 16, **characterized in that** the PEF is introduced under a melt pressure of from 700 bar to 3000 bar into an injection mold.

18. Process according to any of Claims 10 to 14, **characterized in that** the preform is produced in an extrusion blow molding process.

19. Process according to Claim 18, **characterized in that** the PEF is introduced under an extrusion pressure of from 100 bar to 300 bar into an extrusion channel of an extruder head.

20. Process according to Claim 18 or 19, **characterized in that** the PEF is extruded in the form of a parison through an annular die with gap width from 1 mm to 4 mm before a medium injected under superatmospheric pressure is used to blow a section of the extruded parison in a mold cavity of a blow mold to give the preform.

21. Process according to any of Claims 10 to 14, **characterized in that** the preform is produced within a mold cavity in a flow molding process.

22. Process according to any of Claims 10 to 21, **characterized in that** the preform produced is cooled within the mold cavity to a temperature that is below the melting point by from 30°C to 110°C but above the glass transition temperature of the PEF.

23. Process according to Claim 22, **characterized in that**, after the preform produced has been removed from the mold cavity it is cooled in a cooling jacket until the temperature of its external wall is from 40°C to 70°C before it is removed from the cooling jacket for further processing or for intermediate storage.

24. Plastics container with a container body closed by a container base, and with, adjoining the container body, a container neck with a pouring outlet, **characterized in that** said container has been produced in a stretch blow molding process from a preform produced according to any of Claims 10 to 23.

25. Plastics container according to Claim 24, **characterized in that** the stretching ratio, measured by way of the surface profile, of said container to the preform is from 100% to 1000%.

26. Plastics container according to Claim 24 or 25, **characterized in that** the cross section of said container at half of the height of its container body is rotationally symmetrical and in this region the wall thickness distribution of said container deviates around the circumference by no more than +/- 10% from an intended wall thickness.

27. Plastics container according to Claim 24 or 25, **characterized in that** the container body of said container is oval with a height-to-width ratio extending as far as 1:2, and at half of the height of the container body the wall thickness distribution of said container deviates around the circumference by no more than +/- 25% from an intended wall thickness.

28. Plastics container according to Claim 24 or 25, **characterized in that** said container has a flat container body, the height-to-width ratio of which is smaller than 1:2 but greater than 1:10, and **in that**, at half of the height of the container body, the wall thickness distribution of said container deviates around the circumference by no more than +/- 50% from an intended wall thickness.

29. Plastics container according to any of Claims 24 to 28, **characterized in that**, when said container has been filled with CO₂-containing contents and with CO₂ content of from 4 to 10 g/l at 23°C, the volume increase exhibited by said container when the temperature is increased to 38°C within 24 hours is smaller than 10%.

30. Plastics container according to any of Claims 24 to 28, **characterized in that**, when said container has been filled and the internal pressure of an inert gas, in particular nitrogen, is from 0.2 bar to 2 bar, the volume increase exhibited by said container when the temperature is increased to 38°C within 24 hours is smaller than 10%.

31. Plastics container according to any of Claims 24 to 30, **characterized in that** said container is designed as a pressure container and its pressure resistance is at least 100% above the fill pressure at 23°C.

32. Process for the production of a plastics container according to any of Claims 24 to 31, **characterized in that**, after the preform body of the preform has been heated to a processing temperature that is above the glass transition temperature of the PEF by from 5°C to 25°C, the preform is inserted into a mold cavity of a blow mold and blown by a blowing medium injected under superatmospheric pressure, and is stretched axially here by means of a stretching mandrel, and then is removed from the blow mold.

33. Process according to Claim 32, **characterized in that** the axial stretching of the preform takes place with a stretching-mandrel velocity of from 0.5 m/s to 3 m/s.

34. Process according to Claim 33, **characterized in that** the blowing medium is introduced with a first flow velocity of from 0.02 l/s to 5 l/sec into the mold cavity in a first stage, and then is injected with a second flow velocity of from 0.05 1/s to 5 1/s in a second stage.

35. Process according to Claim 34, **characterized in that** the mold cavity of the blow mold is deaerated at a flow rate of from 0.02 l/s to 5 l/s.

36. Process according to any of Claims 32 to 35, **characterized in that** the blowing medium is introduced under a pressure of from 5 bar to 50 bar into the preform.

## Revendications

1. Préforme pour fabrication d'un récipient en matière synthétique par un procédé d'étirage et soufflage, comportant un corps de préforme (2) allongé, de forme tubulaire, qui est fermé, à l'une de ses extrémités longitudinales, avec un fond de préforme (3) et présente, à son autre extrémité longitudinale, un col de préforme (4), laquelle préforme est constituée, au moins en partie, de poly(éthylène furanoate) (PEF),
**caractérisée en ce que** le poly(éthylène furanoate) utilisé pour la fabrication de la préforme présente une viscosité qui, déterminée selon la méthode de mesure de la norme ASTM D-4603, vaut de 0,75 à 0,9 dL/g, ainsi qu'une teneur en eau inférieure à 50 ppm.

2. Préforme conforme à la revendication 1, **caractérisée en ce que** le PEF comprend de 10 à 100 % de PEF biosourcé.

3. Préforme conforme à la revendication 1 ou 2, **caractérisée en ce que** le PEF comprend jusqu'à 100 % de matériau régénéré.

4. Préforme conforme à l'une des revendications 1 à 3, **caractérisée en ce que** le PEF a subi un moussage par voie physique ou chimique et présente un degré de moussage de 10 à 30 %.

5. Préforme conforme à l'une des revendications précédentes, **caractérisée en ce que** le PEF a été préparé selon un procédé SSD (polycondensation à l'état solide) ou MTR (conversion d'une masse fondue en une résine), à l'aide d'un catalyseur choisi dans l'ensemble formé par les métaux alcalins, métaux alcalino-terreux, métaux de transition et autres métaux du Système Périodique des éléments, typiquement à l'état de sel, d'oxyde ou de complexe de ces éléments.

6. Préforme conforme à l'une des revendications précédentes, **caractérisée en ce que** le PEF comprend jusqu'à 20 % en poids de matériau de nature différente.

7. Préforme conforme à la revendication 6, **caractérisée en ce que** le PEF comprend des colorants, des ajouts stabilisants comme par exemple des fibres de verre ou des billes de verre ou des mélanges de celles-ci, des adjuvants, ou des polymères de nature différente.

8. Préforme conforme à l'une des revendications précédentes, **caractérisée en ce que** le PEF est mélangé avec d'autres matières synthétiques.

9. Préforme conforme à la revendication 8, **caractérisée en ce que** les autres matières synthétiques sont choisies dans l'ensemble formé par les PET, polyesters, polyamides, polycarbonates, polyoléfines, silicones, leurs copolymères et des mélanges de matières synthétiques.

10. Procédé de fabrication d'une préforme conforme à la revendication 1, **caractérisé en ce que** le PEF est séché à une température de séchage qui vaut de 100 à 160 °C.

11. Procédé de fabrication d'une préforme conforme à la revendication 1, **caractérisé en ce que** le PEF est séché à une température qui vaut de plus de 160 °C à 220 °C et agité au moyen d'un agitateur au cours de l'opération de séchage.

12. Procédé conforme à la revendication 10 ou 11, **caractérisé en ce que** l'opération de séchage du PEF est assistée par un apport d'énergie sous forme de rayonnement microondes.

13. Procédé conforme à l'une des revendications 10 à 12, **caractérisé en ce que** le séchage du PEF est effectué sous vide ou sous une atmosphère de gaz non-oxydant qui refoule l'oxygène.

14. Procédé conforme à l'une des revendications 10 à 13, **caractérisé en ce que**, pour la fabrication de la préforme, le PEF est chauffé à une température de travail qui est supérieure à la température de fusion, mais inférieure à 290 °C, cette température étant mesurée à la sortie d'une extrudeuse qui alimente en PEF le dispositif servant à la fabrication de la préforme.

15. Procédé conforme à l'une des revendications 10 à 14, **caractérisé en ce que** la préforme est fabriquée selon un procédé de moulage par injection, dans une cavité de moule équipée d'un système de canal chauffant muni d'une vanne à pointeau, de 3,9 à 6,1 mm et de préférence de 4,5 à 5,5 mm.

16. Procédé conforme à la revendication 15, **caractérisé en ce que** le PEF est introduit dans un moule pour injection avec un débit de 11 à 30 g/s.

17. Procédé conforme à la revendication 15 ou 16, **caractérisé en ce que** le PEF est introduit dans un moule pour injection avec une pression de coulée de 700 à 3000 bars.

18. Procédé conforme à l'une des revendications 10 à 14, **caractérisé en ce que** la préforme est fabriquée selon un procédé d'extrusion-soufflage.

19. Procédé conforme à la revendication 18, **caractérisé en ce que** le PEF est introduit dans un canal d'extrusion d'une tête d'extrusion avec une pression d'extrusion de 100 à 300 bars.

20. Procédé conforme à la revendication 18 ou 19, **caractérisé en ce que** le PEF est extrudé sous la forme d'un tube, à travers une filière annulaire de 1 à 4 mm de largeur, puis une section du tube extrudé est dilatée par soufflage en une préforme, dans une cavité d'un moule de soufflage, avec un agent de soufflage introduit en surpression.

21. Procédé conforme à l'une des revendications 10 à 14, **caractérisé en ce que** la préforme est fabriquée selon un procédé de formage par fluage à l'intérieur d'une cavité de moule.

22. Procédé conforme à l'une des revendications 10 à 21, **caractérisé en ce que** la préforme fabriquée est refroidie, à l'intérieur de la cavité de moule, à une température qui est inférieure de 30 à 110 °C à la température de fusion du PEF, mais supérieure à sa température de transition vitreuse.

23. Procédé conforme à la revendication 22, **caractérisé en ce que** la préforme fabriquée, une fois retirée de la cavité de moule, est refroidie, dans une chemise de réfrigération, jusqu'à ce que sa paroi externe soit à une température de 40 à 70 °C, puis retirée de la chemise de réfrigération en vue d'un traitement ultérieur ou d'un entreposage.

24. Récipient en matière synthétique, comprenant un corps de récipient, fermé par un fond de récipient, et un col de récipient attaché au corps de récipient et muni d'une ouverture déversoir, **caractérisé en ce qu'**il est fabriqué, en tant que produit fini, selon un procédé d'étirage et soufflage à partir d'une préforme fabriquée conformément à l'une des revendications 10 à 23.

25. Récipient en matière synthétique, conforme à la revendication 24, **caractérisé en ce qu'**il présente, par rapport à la préforme, un taux d'étirage, mesuré sur le pourtour de la surface, de 100 à 1000 %.

26. Récipient en matière synthétique, conforme à la revendication 24 ou 25, **caractérisé en ce qu'**il présente, sur une moitié de la hauteur de son corps de récipient, une section transversale à symétrie par rotation, et **en ce qu'**il présente dans cette zone une distribution sur son pourtour de l'épaisseur de paroi telle que la valeur de celle-ci ne s'écarte pas de plus de +/- 10 % de sa valeur de consigne.

27. Récipient en matière synthétique, conforme à la revendication 24 ou 25, **caractérisé en ce qu'**il présente un corps de récipient de forme ovale, avec un rapport de la profondeur à la largeur valant jusqu'à 1/2, et **en ce qu'**il présente, sur une moitié de la hauteur de son corps de récipient, une distribution sur son pourtour de l'épaisseur de paroi telle que la valeur de celle-ci ne s'écarte pas de plus de +/- 25 % de sa valeur de consigne.

28. Récipient en matière synthétique, conforme à la revendication 24 ou 25, **caractérisé en ce qu'**il présente un corps de récipient de forme plate, dont le rapport de la profondeur à la largeur est inférieur à 1/2, mais supérieur à 1/10, et **en ce qu'**il présente, sur une moitié de la hauteur de son corps de récipient, une distribution sur son pourtour de l'épaisseur de paroi telle que la valeur de celle-ci ne s'écarte pas de plus de +/- 50 % de sa valeur de consigne.

29. Récipient en matière synthétique, conforme à l'une des revendications 24 à 28, **caractérisé en ce que**, lorsqu'il est rempli d'un liquide contenant du CO₂, il supporte, pour une teneur en CO₂ de 4 à 10 g/L à 23 °C et lors d'une élévation de la température à 38 °C en 24 heures, une augmentation de volume inférieure à 10 %.

30. Récipient en matière synthétique, conforme à l'une des revendications 24 à 28, **caractérisé en ce que**, lorsqu'il est rempli, il supporte, pour une pression interne de 0,2 à 2 bars d'un gaz inerte, en particulier de l'azote, à 23 °C et lors d'une élévation de la température à 38 °C en 24 heures, une augmentation de volume inférieure à 10 %.

31. Récipient en matière synthétique, conforme à l'une des revendications 24 à 30, **caractérisé en ce qu'**il est façonné en tant que récipient à pression et **en ce qu'**il présente une stabilité en pression d'au moins 100 % par rapport à la pression de remplissage à 23 °C.

32. Procédé de fabrication d'un récipient en matière synthétique conforme à l'une des revendications 24 à 31, **caractérisé en ce que** la préforme, après chauffage de son corps de préforme à une température de travail située de 5 à 25 °C au-dessus de la température de transition vitreuse du PEF, est placée dans une cavité d'un moule de soufflage et y subit un soufflage, réalisé au moyen d'un agent de soufflage introduit dedans en surpression, et **en ce qu'**elle est alors étirée dans la direction axiale au moyen d'un mandrin, et ensuite retirée du moule de soufflage.

33. Procédé conforme à la revendication 32, **caractérisé en ce que** l'étirage de la préforme dans la direction axiale est effectué avec une vitesse de déplacement du mandrin de 0,5 à 3 m/s.

34. Procédé conforme à la revendication 33, **caractérisé en ce que**, dans un premier stade, l'agent de soufflage est introduit dans la cavité de moule avec un premier débit de 0,02 à 5 L/s, et ensuite, dans un deuxième stade, il y est introduit pour le soufflage avec un deuxième débit de 0,05 à 5 L/s.

35. Procédé conforme à la revendication 34, **caractérisé en ce que** l'air est chassé de la cavité du moule de soufflage avec un débit de 0.02 à 5 L/s.

36. Procédé conforme à l'une des revendications 32 à 35, **caractérisé en ce que** l'agent de soufflage est introduit dans la préforme sous une pression de 5 à 50 bars.
